# EUROPEAN PATENT APPLICATION

(11) **EP 4 401 462 A1**
(43) Date of publication of application: **17.07.2024**
(21) Application number: 22885664.7
(22) Date of filing: 11.10.2022
(51) Int. Cl.: H04W 28/04

(54) **COMMUNICATION METHOD, AND DEVICE, STORAGE MEDIUM AND COMPUTER PROGRAM PRODUCT**

(30) Priority: 25.10.2021 CN 202111243293
(71) Applicant: Huawei Technologies Co., Ltd., Shenzhen, Guangdong 518129 (CN)
(72) Inventor: WU, Gengshi, Shenzhen, Guangdong 518129 (CN); FU, Kai, Shenzhen, Guangdong 518129 (CN); YU, Zhan, Shenzhen, Guangdong 518129 (CN); XIE, Zichen, Shenzhen, Guangdong 518129 (CN)
(74) Representative: Pfenning, Meinig & Partner mbB
(86) International application number: PCT/CN2022/124707
(87) International publication number: WO 2023/071785

(57) **Abstract**

Embodiments of the present disclosure relate to a method, a device, a storage medium, and a computer program product for short-range wireless communication. The method provided herein includes: A receiving device receives a data frame from a sending device; generates a feedback frame for the data frame, where the feedback frame includes an encoded access code of the data frame, and the encoded access code indicates whether the data frame is correctly received; and sends the feedback frame to the receiving device. In this manner, an existing bottleneck problem of a packet header during retransmission and combination is avoided, a signal-to-noise ratio during retransmission and combination is greatly improved, and lower sensitivity is implemented. In addition, when no additional overheads are generated, receiving performance during retransmission and combination in a strong interference environment is greatly improved, and anti-interference performance of a receiver is significantly improved.

## Description

### CROSS-REFERENCE TO RELATED APPLICATIONS

This application claims priority to Chinese Patent Application 202111243293.2, filed on October 25, 2021, and entitled "COMMUNICATION METHOD, DEVICE, STORAGE MEDIUM, AND COMPUTER PROGRAM PRODUCT".

### TECHNICAL FIELD

Embodiments of the present disclosure generally relate to the field of communication technologies, and more specifically, to a method, a device, a storage medium, and a computer program product for short-range wireless communication.

### BACKGROUND

A short-range wireless communication technology is a technology for wireless transmission of data within a small range. The short-range wireless communication technology usually covers a range from several meters to hundreds of meters. Common short-range wireless communication technologies include a Bluetooth (Bluetooth, BT) technology, a wireless high-fidelity (Wi-Fi) technology, a near-field communication (Near-Field Communication, NFC) technology, and the like.

The Bluetooth technology is a general wireless technical standard developed by a Bluetooth standard organization (Special Interest Group, SIG), and is widely applied to various terminal devices, wearable devices, computer peripherals, smart home devices, and other internet of things (Internet of Things, IoT) devices. This technology features secure, fast, low-cost, low-power, and low-latency data interactions between the devices.

### SUMMARY

In general, example embodiments of the present disclosure provide a method, a device, a computer-readable storage medium, and a computer program product for short-range wireless communication.

According to a first aspect of the present disclosure, a short-range wireless communication method is provided. In the method, a receiving device generates a feedback frame in response to receiving a data frame. The feedback frame includes first indication information. The first indication information is obtained after the receiving device encodes an access code of a sending device in the data frame, the first indication information indicates whether the data frame is correctly received, and the first indication information is indicated in a part other than a packet header field and a data field in the feedback frame. The receiving device sends the feedback frame to the sending device.

In a first implementation of the first aspect, the receiving device may check the received data frame. The receiving device generates the first indication information by encoding the access code in the data frame based on a check result, and generates the feedback frame based on the first indication information.

In a second implementation of the first aspect, the receiving device may divide the access code into a plurality of subcode segments, and determine a group of first target bits based on the check result. One reference bit in the first target bits corresponds to one subcode segment in the plurality of subcode segments. In addition, the receiving device may encode a corresponding subcode segment in the plurality of subcode segments by using one first target bit in the group of first target bits, and generate the first indication information based on a plurality of encoded subcode segments.

In a third implementation of the first aspect, the receiving device performs encoding by performing a logical operation on the first target bit in the plurality of first target bits and the corresponding subcode segment in the plurality of subcode segments.

In a fourth implementation of the first aspect, the receiving device obtains a plurality of groups of reference bits; and in response to determining, based on the check result, that the data frame is correctly received, determines, as a group of first target bits, a first reference bit that is in the plurality of groups of reference bits and that corresponds to correct receiving.

In a fifth implementation of the first aspect, the receiving device may obtain a plurality of groups of reference bits; and in response to determining, based on the check result, that the data frame is not correctly received, determine, as a group of first target bits, a second reference bit that is in the plurality of groups of reference bits and that corresponds to incorrect receiving.

In a sixth implementation of the first aspect, the receiving device may further receive a retransmitted data frame from the sending device. The receiving device may obtain second indication information from the retransmitted data frame. The second indication information is obtained after the sending device encodes the access code of the sending device in the retransmitted data frame, and the second indication information indicates whether packet header information in the retransmitted data frame is consistent with packet header information in the previously received data frame. The receiving device may determine a data combination possibility of the retransmitted data frame and the previously received data frame based on the second indication information.

In a seventh implementation of the first aspect, the receiving device may determine a group of second target bits by decoding the second indication information, where the second indication information is obtained after the sending device encodes the access code by using the group of second target bits. If it is determined that the packet header information is changed, the receiving device determines that the retransmitted data frame is not combined with data of the previously received data frame.

In an eighth implementation of the first aspect, if it is determined that the packet header information is not changed, the receiving device determines that the retransmitted data frame is combined with the data of the previously received data frame.

In a ninth implementation of the first aspect, if it is determined that the data frame is received on a downlink from the sending device to the receiving device, the receiving device may send the feedback frame on an uplink from the receiving device to the sending device.

In a tenth implementation of the first aspect, the receiving device may send the feedback frame at a time interval dedicated to sending a feedback frame.

According to the method provided in the first aspect of the present disclosure, the access code can be segmented, and then a target bit of each segment is encoded. When no additional overheads are generated, an existing bottleneck problem of a packet header during retransmission and combination is avoided, a signal-to-noise ratio during retransmission and combination is greatly improved, and lower sensitivity is implemented. In addition, by using an access code's target bit-based segmentation and encoding technology provided in the present disclosure, when no additional overheads are generated, receiving performance during retransmission and combination in a strong interference environment is greatly improved, and anti-interference performance of a receiver is significantly improved.

According to a second aspect of the present disclosure, a short-range wireless communication method is provided. In the method, a sending device receives a feedback frame for a data frame from a receiving device. The feedback frame includes first indication information. The first indication information is obtained after the receiving device encodes an access code of the sending device in the data frame, the first indication information indicates whether the data frame is correctly received, and the first indication information is indicated in a part other than a packet header field and a data field in the feedback frame. The sending device determines, based on the first indication information, correctness of receiving the data frame by the receiving device.

In a first implementation of the second aspect, the sending device determines a group of first target bits by decoding the first indication information, where the first indication information is obtained after the receiving device encodes the access code by using the group of first target bits; and determines, based on the group of first target bits, correctness of receiving the data frame by the receiving device.

In a second implementation of the second aspect, if it is determined that the data frame is not correctly received by the receiving device, the sending device sends a retransmitted data frame to the receiving device. The retransmitted data frame includes second indication information. The second indication information is obtained after the sending device encodes the access code of the sending device in the retransmitted data frame, and the second indication information indicates whether packet header information in the retransmitted data frame is consistent with packet header information in the previously received data frame.

In a third implementation of the second aspect, if it is determined that the data frame is not correctly received by the receiving device, the sending device determines a group of second target bits. The sending device generates the second indication information by encoding the access code by using the group of second target bits; and generates the retransmitted data frame based on the second indication information.

In a fourth implementation of the second aspect, if it is determined that the data frame is received on a downlink from the sending device to the receiving device, the sending device may send the feedback frame on an uplink from the receiving device to the sending device.

In a fifth implementation of the second aspect, the sending device may send the feedback frame at a time interval dedicated to sending a feedback frame.

According to the method provided in the second aspect of the present disclosure, the access code is segmented and a target bit of each segment is encoded, so that the sending device can determine, based on a feedback from the receiving device, whether the sent data frame is correctly received by the receiving device, and further determine that data of the previous frame needs to be retransmitted or data of a next frame needs to be sent. In this way, an existing bottleneck problem of a packet header during retransmission and combination is avoided, receiving performance during retransmission and combination in a strong interference environment is greatly improved, and anti-interference performance of a receiver is significantly improved.

According to a third aspect of the present disclosure, a receiving device is provided. The receiving device includes at least one processor and at least one memory that includes computer program code. The at least one memory and the computer program code may work with the at least one processor to enable the at least one processor to perform the method according to the first aspect of the present disclosure.

According to a fourth aspect of the present disclosure, a sending device is provided. The sending device includes at least one processor and at least one memory that includes computer program code. The at least one memory and the computer program code may work with the at least one processor to enable the at least one processor to perform the method according to the second aspect of the present disclosure.

According to a fifth aspect of the present disclosure, a computer-readable storage medium is provided. The computer-readable storage medium stores computer-executable instructions. When the computer-executable instructions are executed by a processor, the processor is enabled to perform the method according to the first aspect or the second aspect of the present disclosure.

According to a sixth aspect of the present disclosure, a computer program product is provided. The computer program product includes computer-executable instructions. When the computer-executable instructions are executed by a processor, the processor is enabled to perform the method according to the first aspect or the second aspect of the present disclosure.

According to a seventh aspect of the present disclosure, a communication apparatus is provided. The communication apparatus includes a transceiver unit and a processing unit. The transceiver unit is configured to send a feedback frame to a sending device. The processing unit is configured to generate the feedback frame in response to receiving a data frame. The feedback frame includes first indication information. The first indication information is obtained after a receiving device encodes an access code of the sending device in the data frame, the first indication information indicates whether the data frame is correctly received, and the first indication information is indicated in a part other than a packet header field and a data field in the feedback frame.

In a first implementation of the seventh aspect, the processing unit is further configured to: check the received data frame; generate the first indication information by encoding the access code in the data frame based on a check result; and generate the feedback frame based on the first indication information.

In a second implementation of the seventh aspect, the processing unit is further configured to: divide the access code into a plurality of subcode segments; determine a group of first target bits based on the check result, where one reference bit in the first target bits corresponds to one subcode segment in the plurality of subcode segments; encode a corresponding subcode segment in the plurality of subcode segments by using one first target bit in the group of first target bits; and generate the first indication information based on a plurality of encoded subcode segments.

In a third implementation of the seventh aspect, the processing unit is further configured to perform encoding by performing a logical operation on the first target bit in the plurality of first target bits and the corresponding subcode segment in the plurality of subcode segments.

In a fourth implementation of the seventh aspect, the processing unit is further configured to: obtain a plurality of groups of reference bits; and in response to determining, based on the check result, that the data frame is correctly received, determine, as a group of first target bits, a first reference bit that is in the plurality of groups of reference bits and that corresponds to correct receiving.

In a fifth implementation of the seventh aspect, the processing unit is further configured to: obtain a plurality of groups of reference bits; and in response to determining, based on the check result, that the data frame is not correctly received, determine, as a group of first target bits, a second reference bit that is in the plurality of groups of reference bits and that corresponds to incorrect receiving.

In a sixth implementation of the seventh aspect, the transceiver unit is further configured to receive a retransmitted data frame from the sending device, and the processing unit is further configured to: obtain second indication information from the retransmitted data frame, where the second indication information is obtained after the sending device encodes the access code of the sending device in the retransmitted data frame, and the second indication information indicates whether packet header information in the retransmitted data frame is consistent with packet header information in the previously received data frame; and determine a data combination possibility of the retransmitted data frame and the previously received data frame based on the second indication information.

In a seventh implementation of the seventh aspect, the processing unit is further configured to: determine a group of second target bits by decoding the second indication information, where the second indication information is obtained after the sending device encodes the access code by using the group of second target bits; and if it is determined that the packet header information is changed, determine that the retransmitted data frame is not combined with data of the previously received data frame.

In an eighth implementation of the seventh aspect, the processing unit is further configured to: if it is determined that the packet header information is not changed, determine that the retransmitted data frame is combined with the data of the previously received data frame.

In a ninth implementation of the seventh aspect, the transceiver unit is further configured to: if it is determined that the data frame is received on a downlink from the sending device to the receiving device, send the feedback frame on an uplink from the receiving device to the sending device.

In a tenth implementation of the seventh aspect, the transceiver unit is further configured to send the feedback frame at a time interval dedicated to sending a feedback frame.

According to an eighth aspect of the present disclosure, a communication apparatus is provided. The communication apparatus includes a transceiver unit and a processing unit. The transceiver unit is configured to receive a feedback frame for a data frame from a receiving device. The feedback frame includes first indication information. The first indication information is obtained after the receiving device encodes an access code of a sending device in the data frame, the first indication information indicates whether the data frame is correctly received, and the first indication information is indicated in a part other than a packet header field and a data field in the feedback frame. The processing unit is configured to determine, based on the first indication information, correctness of receiving the data frame by the receiving device.

In a first implementation of the eighth aspect, the processing unit is further configured to: determine a group of first target bits by decoding the first indication information, where the first indication information is obtained after the receiving device encodes the access code by using the group of first target bits; and determine, based on the group of first target bits, correctness of receiving the data frame by the receiving device.

In a second implementation of the eighth aspect, the processing unit is further configured to: if it is determined that the data frame is not correctly received by the receiving device, send a retransmitted data frame to the receiving device. The retransmitted data frame includes second indication information. The second indication information is obtained after the sending device encodes the access code of the sending device in the retransmitted data frame, and the second indication information indicates whether packet header information in the retransmitted data frame is consistent with packet header information in the previously received data frame.

In a third implementation of the eighth aspect, the processing unit is further configured to: if it is determined that the data frame is not correctly received by the receiving device, determine a group of second target bits. The sending device generates the second indication information by encoding the access code by using the group of second target bits; and generates the retransmitted data frame based on the second indication information.

In a fourth implementation of the eighth aspect, the transceiver unit is further configured to: if it is determined that the feedback frame is received on an uplink from the receiving device to the sending device, send the retransmitted data frame on a downlink from the sending device to the receiving device.

In a fifth implementation of the eighth aspect, the transceiver unit is further configured to send the retransmitted data frame at another time interval other than a time interval dedicated to sending a feedback frame.

According to a ninth aspect of the present disclosure, a communication apparatus is provided, including at least one processor. The at least one processor is configured to execute a computer program or instructions in a memory, to enable the communication apparatus to perform the method according to the embodiments of the first aspect or the second aspect.

According to a tenth aspect of the present disclosure, a communication apparatus is provided, including a processor, a transceiver, and a memory. The processor is configured to execute a computer program or instructions in the memory, to enable the communication apparatus to perform the method according to the embodiments of the first aspect or the second aspect.

According to an eleventh aspect of the present disclosure, a communication apparatus is provided, including a processor and a memory. The processor is configured to execute a computer program or instructions in the memory, to enable the communication apparatus to perform the method according to the embodiments of the first aspect or the second aspect.

According to a twelfth aspect of the present disclosure, another communication apparatus is provided, including an interface circuit and a logic circuit. The interface circuit may be understood as an input/output interface, and the logic circuit may be configured to run code instructions to perform the method according to the embodiments of the first aspect or the second aspect.

According to the solutions provided in the present disclosure, an existing bottleneck problem of a packet header during retransmission and combination is avoided, a signal-to-noise ratio during retransmission and combination is greatly improved, and lower sensitivity is implemented. In addition, when no additional overheads are generated, receiving performance during retransmission and combination in a strong interference environment is greatly improved, and anti-interference performance of a receiver is significantly improved.

### BRIEF DESCRIPTION OF DRAWINGS

The foregoing and other features, advantages, and aspects of embodiments of the present disclosure become more obvious with reference to the accompanying drawings and with reference to the following detailed descriptions. In the accompanying drawings, same or similar reference numerals represent same or similar elements.
FIG. 1 is a schematic diagram of an example network environment in which an example embodiment of the present disclosure may be implemented;
FIG. 2 is a signaling interaction diagram for short-range wireless communication according to an example embodiment of the present disclosure;
FIG. 3 is a schematic diagram of an example structure of a data frame according to an example embodiment of the present disclosure;
FIG. 4 is a schematic diagram for short-range wireless communication according to an example embodiment of the present disclosure;
FIG. 5 is a schematic diagram for short-range wireless communication according to an example embodiment of the present disclosure;
FIG. 6 is a schematic diagram for short-range wireless communication according to an example embodiment of the present disclosure;
FIG. 7 is a flowchart of a method for short-range wireless communication according to an example embodiment of the present disclosure;
FIG. 8 is a flowchart of a method for short-range wireless communication according to an example embodiment of the present disclosure;
FIG. 9 is a block diagram of a communication apparatus according to an example embodiment of the present disclosure;
FIG. 10 is a block diagram of a communication apparatus according to an example embodiment of the present disclosure;
FIG. 11 is a block diagram of a communication apparatus according to an example embodiment of the present disclosure; and
FIG. 12 is a block diagram of a communication apparatus according to an example embodiment of the present disclosure.

### DESCRIPTION OF EMBODIMENTS

The following describes some example embodiments with reference to the accompanying drawings. Although example embodiments of the present disclosure are shown in the accompanying drawings, it should be understood that the present disclosure may be implemented in various forms, and should not be construed as being limited to the embodiments described herein. On the contrary, these embodiments are provided to thoroughly and completely understand the present disclosure. It should be understood that the accompanying drawings and embodiments of the present disclosure are only used as examples, but are not intended to limit the protection scope of the present disclosure.

The terms "communication network" and "wireless network" used in this specification mean a network that complies with any appropriate communication standard, such as long term evolution (LTE), LTE advanced (LTE-A), wideband code division multiple access (WCDMA), and high speed packet access (HSPA). In addition, communication between a terminal device and an access network device in a communication network may be performed according to any appropriate generation communication protocol, including but not limited to first generation (1G), second generation (2G), 2.5G, 2.75G, third generation (3G), fourth generation (4G), 4.5G, and fifth generation (5G) communication protocols, and/or any other protocol that is currently known or to be developed in the future. Embodiments of the present disclosure may be applied to various communication systems, including cellular and non-cellular communication systems. In view of rapid development of communication, certainly, there also may be future types of communication technologies and systems that can embody the present disclosure. Therefore, the scope of the present disclosure should not be considered to be limited to the systems described above. For the purpose of illustration, embodiments of the present disclosure are described with reference to a 5G communication system.

The terms "terminal device" and "user equipment" used in this specification mean any terminal device that can perform wireless communication. By way of example and not limitation, the terminal device may also be referred to as a communication device, user equipment (UE), a subscriber station (SS), a portable subscriber station, a mobile station (MS), or an access terminal (AT). The terminal device may include but be not limited to a mobile phone, a cellular phone, a smartphone, an IP voice (VoIP) phone, a wireless local loop phone, a tablet computer, a wearable terminal device, a personal digital assistant (PDA), a portable computer, a desktop computer, an image capture terminal device (for example, a digital camera), a game terminal device, a music storage and playback device, a vehicle-mounted wireless terminal device, a wireless endpoint, a mobile station, a notebook computer internal device (LEE), a notebook computer external device (LME), a USB dongle, a smart device, wireless customer-premises equipment (CPE), an internet of things (loT) device, a watch or another wearable device, a head-mounted display (HMD), a vehicle, an uncrewed aerial vehicle, a medical device and application (for example, remote surgery), an industrial device and application (for example, a robot and/or another wireless device operating in industrial and/or automated processing chain environments), a consumer electronic device, a device commercial operation, an industrial wireless network, and/or the like. In the following descriptions, the terms "terminal device", "communication device", "terminal", "user equipment", and "UE" may be used interchangeably.

The term "access network device" used in this specification includes but is not limited to a base station (BS), a gateway, a registration management entity, and another appropriate device in a communication system. The term "base station" or "BS" represents a NodeB (NodeB or NB), an evolved NodeB (eNodeB or eNB), an NR (new radio) NB (also referred to as gNB), a remote radio unit (RRU), a radio head (RH), a remote radio head (RRH), a relay, or a low-power node (for example, femto or pico). In addition, the "access network device" may be a central unit (Central Unit, CU) or a distributed unit (Distributed Unit, DU). In some example embodiments, the CU and the DU may be placed in different locations. For example, the CU is placed in a central equipment room and the DU is placed in a high-traffic area. In some other example embodiments, the CU and the DU may alternatively be placed in a same location, for example, in a same equipment room, or in different components in a same rack.

The term "include" and variants thereof used in this specification indicate open inclusion, that is, "including but not limited to". Unless otherwise stated, the term "or" means "and/or". The term "based on" means "at least partially based on". The terms "example embodiment" and "some embodiments" represent "at least one example embodiment". Other explicit and implicit definitions may also be included below.

As mentioned above, a Bluetooth technology is a short-range wireless transmission technology. Currently, main frame formats of a Bluetooth standard may include a basic rate (Basic Rate, BR)/enhanced data rate (Enhanced Data Rate, EDR) frame format and a low energy (Low Energy, LE) frame format.

A BR/EDR frame structure is a classic Bluetooth frame format, including fields such as a preamble, a synchronization code, a packet header, and a data field. The preamble is used to adjust an automatic gain control (Automatic Gain Control, AGC) module and process a signal. The synchronization code field is used to perform frame synchronization. The packet header field includes control information. A payload (payload) part is used to transmit data information.

An LE frame structure is another typical Bluetooth frame format, including an LE non-encoded frame and an LE encoded frame. The LE frame format includes a preamble, an access code, a data field, and another field, and functions of the fields of the LE frame are similar to those of the corresponding fields of the BR/EDR frame. The preamble is used to adjust an ACG module, and the access code is responsible for frame synchronization. A packet header responsible for control information and a data field responsible for data form a protocol data unit (Protocol Data Unit, PDU).

In the short-range wireless communication that uses the Bluetooth technology as an example, "retransmission" and "combination" are important means of receiving sensitivity of a system. A retransmission technology means that a receiver does not process a frame immediately after receiving the frame. Instead, the receiver checks data correctness first, for example, through cyclic redundancy check (Cyclic Redundancy Check, CRC). If a check result is correct, the received data is processed normally. If the check fails, it indicates that the received data is incorrect and cannot be processed. In this case, check error information is fed back to a sender. The sender resends the data of the previous frame after receiving the feedback, and the receiver receives and checks the data again. This process is repeated until the check result is correct, and then a next frame is received and sent.

A combination technology may also be referred to as a retransmission and combination technology. That is, on the basis of retransmission, data received after a same frame is retransmitted for a plurality of times is stored, and processing such as accumulation and combination is performed. Combination can reduce impact of factors such as noise, achieve a higher signal-to-noise ratio than a single transmission, and further improve receiving sensitivity. Because the control information of the packet header may change, only data fields are usually combined.

In a conventional solution, retransmission performance is limited by performance of the packet header. This is because check result information is indicated in the packet header. For example, the check result information is represented by a piece of bit data of the packet header. Therefore, the sender can obtain a correct check result and perform a retransmission operation only when the packet header is correctly received. In other words, receiving performance of the packet header is an upper limit of the retransmission performance.

Therefore, to improve sensitivity of the packet header, redundancy needs to be added to perform encoding protection on the packet header. For example, in a Bluetooth BR/EDR frame format, a packet header uses a repetition code whose bit rate is 1/3, which can improve sensitivity by approximately 5 dB. However, at the cost of encoding protection, a length of the packet header increases by three times, resulting in additional overheads. When the packet header is long and the control information has a large quantity of bits, encoding protection of the packet header brings high overheads and affects an overall throughput.

In addition, if redundancy of the packet header is reduced to reduce overheads of the packet header, even no encoding protection is performed. In this case, sensitivity of the packet header is usually slightly better than that of a data field. Alternatively, when encoding protection is performed on both the packet header and the data field, sensitivity of the packet header is close to or slightly better than sensitivity of the data field due to an encoding type, a code block length, a code rate limitation, or the like. In actual use, when an error occurs in the data field, and the sender is required to retransmit a data frame, retransmission may fail due to a packet header receiving error.

Therefore, when the combination technology is combined with the retransmission technology, data of the data field retransmitted for a plurality of times is accumulated and combined. Theoretically, sensitivity of the data field is greatly improved, and even exceeds sensitivity of the packet header. However, in practice, due to a fact that sensitivity of the packet header is limited, retransmission and combination cannot be performed when a packet header receiving error occurs. As a result, sensitivity of the packet header becomes a performance bottleneck. Consequently, retransmission and combination can only improve system performance to a limited extent, or even not significantly improve the system performance.

In addition, in a conventional combination technology, only data of a data field is usually combined. This is because only a data field in a resent frame is determined to be repeated and unchanged, and some control information of a packet header may be changed. Therefore, data of the packet header cannot be combined.

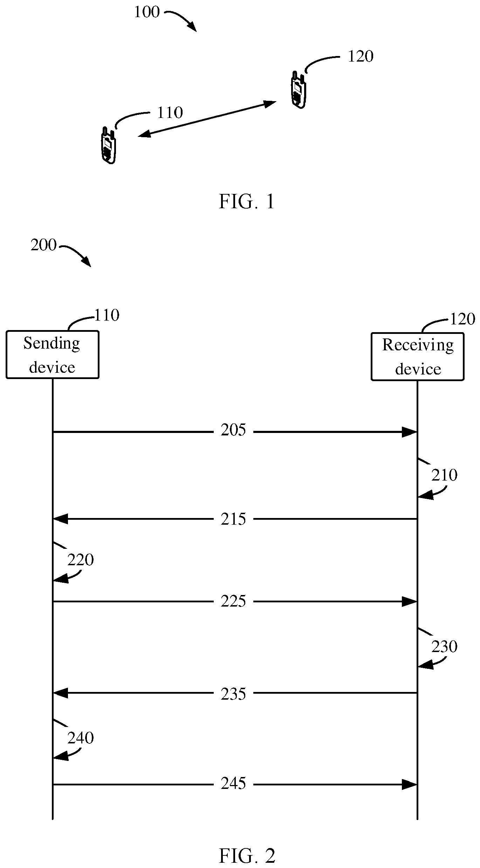

An example process for short-range wireless communication according to embodiments of the present disclosure are discussed below with reference to FIG. 1 to FIG. 7.

FIG. 1 is a schematic diagram of an example network environment 100 in which an example embodiment of the present disclosure may be implemented. As shown in FIG. 1, the network environment 100 may include a device 110 and a device 120 that can implement short-range wireless communication transmission. In some embodiments, the device 110 may be referred to as a sending device 110 in short-range wireless communication, and the device 120 may be referred to as a receiving device 120 in short-range wireless communication. It should be understood that roles of the device 110 and the device 120 may also be interchanged. To be specific, the device 120 serves as a sending device in short-range wireless communication, and the device 110 serves as a receiving device in short-range wireless communication. In the following, for ease of description, the device 110 serves as the sending device 110 in short-range wireless communication, and the device 120 serves as the receiving device 120 in short-range wireless communication.

In the network environment 100, the device 110 and the device 120 may include but be not limited to a mobile phone, a cellular phone, a smartphone, a tablet computer, a tablet phone, a computer, a portable computer, a desktop computer, a personal digital assistant (PDA), a monitor, a computer monitor, a television, a tuner, an entertainment unit, a navigation device, a communication device, a fixed location data unit, a mobile location data unit, a radio, a satellite radio, a music player, a digital music player, a portable music player, a digital video player, a video player, a digital versatile disc (DVD) player, a portable digital video player, or any other appropriate device that supports short-range wireless communication.

It should be understood that the network environment 100 is used for example purposes only and does not imply any limitation on the scope of the present disclosure. Embodiments of the present disclosure may also be embodied in another network environment or architecture. In addition, it should be further understood that the network environment 100 may include other elements or entities configured to implement communication connection, data transmission, or the like. For simplicity of description, these elements or entities are not shown in FIG. 1. However, it does not mean that the embodiments of the present disclosure do not have these elements or entities.

The network environment 100 according to this embodiment of the present disclosure may be a wireless network that complies with any protocol that is currently known or to be developed in the future, including but not limited to a narrowband internet of things (Narrowband Internet of Things, NB-IoT) system, a global system for mobile communications (Global System for Mobile Communications, GSM), an enhanced data rate for GSM evolution (Enhanced Data rate for GSM Evolution, EDGE) system, a wideband code division multiple access (Wideband Code Division Multiple Access, WCDMA) system, a code division multiple access 2000 (Code Division Multiple Access, CDMA2000) system, a time division-synchronization code division multiple access (Time Division-Synchronization Code Division Multiple Access, TD-SCDMA) system, a long term evolution (Long Term Evolution, LTE) system, and three application scenarios of a 5G mobile communication system: eMBB, URLLC, and eMTC.

As described above, in the network environment 100, retransmission and combination performance in short-range wireless data transmission between the sending device 110 and the receiving device 120 is limited by sensitivity of a packet header, and cannot be effectively improved. For example, due to a packet header error, the receiving device 120 cannot perform a combination operation on a retransmitted frame received each time. This is because the packet header includes control information received this time. The current receiving cannot be performed normally due to a control information error. Consequently, receiving of a data field is forcibly terminated. When the receiving device 120 does not receive data of a retransmitted data field, the data cannot be combined with data saved last time.

For the sending device 110, due to the packet header error, the sending device 110 cannot determine whether the receiving device 120 correctly receives the previously sent data frame. Therefore, the sending device 110 cannot determine whether the data of the previous frame is retransmitted or new data of a next frame is transmitted.

Therefore, an embodiment of the present disclosure provides a method for short-range wireless communication. In the method, a receiving device receives a data frame from a sending device; generates a feedback frame for the data frame, where the feedback frame includes an encoded access code of the data frame, and the encoded access code indicates whether the data frame is correctly received; and sends the feedback frame to the receiving device. In this manner, an existing bottleneck problem of a packet header during retransmission and combination is avoided, a signal-to-noise ratio during retransmission and combination is greatly improved, and lower sensitivity is implemented. In addition, when no additional overheads are generated, receiving performance during retransmission and combination in a strong interference environment is greatly improved, and anti-interference performance of a receiver is significantly improved.

Refer to FIG. 2. FIG. 2 is a signaling interaction diagram of a process 200 for short-range wireless communication according to an example embodiment of the present disclosure. The example interaction process 200 may relate to the sending device 110 and the receiving device 120 shown in FIG. 1. For the purpose of discussion, the process 200 is described below with reference to FIG. 1, but it should be understood that the process is also applicable to another communication scenario and device.

As shown in FIG. 2, in 205, the sending device 110 sends a data frame to the receiving device 120. In embodiments of the present disclosure, the term "data frame" may be implemented as any appropriate frame structure that can be supported in short-range wireless communication. For ease of description, the following uses a Bluetooth data frame format to describe a data frame transmitted in the process 200 for short-range wireless communication.

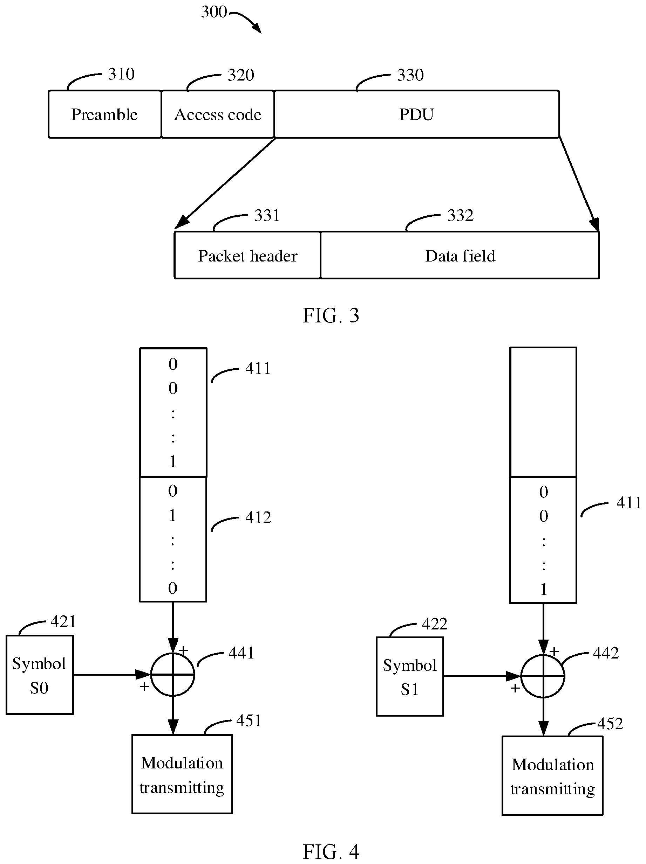

Refer to FIG. 3. FIG. 3 shows an example frame structure 300 of a Bluetooth data frame according to an embodiment of the present disclosure. In FIG. 3, the Bluetooth data frame may include a preamble 310, an access code 320, and a PDU 330. The PDU 330 may include a packet header part 331 and a data field 332. As already mentioned above, the preamble 310 may be used to adjust an ACG module, and the access code 320 may be responsible for frame synchronization.

In the Bluetooth frame format 300, the access code 320 may serve as an identifier of the sending device 110, and the receiving device 120 may have learned the access code of the sending device 110 in advance based on a negotiation mechanism. The access code has a one-to-one correspondence with a device to which the access code belongs. For example, if the sending device changes, the access code changes accordingly. It should be understood that, in embodiments of the present disclosure, the term "access code" may be included in any frame format, and is a field that is known in advance by a receiver and a sender in a specific manner and that can be used for synchronization. For example, in some frame formats, a field used for synchronization is fixed and does not change with a device (for example, an M sequence). For another example, in a Wi-Fi frame format commonly used in a wireless local area network (WLAN), a long training field (LTF) and a short training field (STF) are used for synchronization and other processing. In other words, provided that the field can be known in advance by both the receiver and the sender, the field is applicable to the embodiments of the present disclosure.

Refer to FIG. 2 again. In 210, the receiving device 120 may determine whether the data frame from the sending device 110 can be correctly received. In some embodiments, the receiving device 120 may perform CRC on the received data frame, and determine, based on a check result, whether the receiving device 120 can receive the data frame from the sending device 110.

In some embodiments, the receiving device 120 may generate a feedback frame for the received data frame. The feedback frame may include first indication information, where the first indication information indicates whether the data frame is correctly received. The first indication information may be obtained after the receiving device 120 encodes the access code of the sending device in the data frame.

In some embodiments, the receiving device 120 may be preconfigured with a plurality of groups of reference bits, where the plurality of groups of reference bits correspond to a result of whether the data frame is correctly received. For example, a first group of reference bits in the plurality of groups of reference bits may correspond to that the data frame is correctly received, and a second group of reference bits in the plurality of groups of reference bits may correspond to that the data frame is not correctly received.

Based on this, if the receiving device 120 determines, based on the check result, that the data frame is correctly received, the receiving device 120 may encode the access code by using the first group of reference bits in the plurality of groups of reference bits as a group of first target bits. On the contrary, if the receiving device 120 determines, based on the check result, that the data frame is not correctly received, the receiving device 120 may encode the access code by using the second group of reference bits in the plurality of groups of reference bits as a group of first target bits.

In some embodiments, specifically, the receiving device 120 may divide the access code into a plurality of subcode segments. The receiving device 120 may encode a corresponding subcode segment in the plurality of subcode segments by using one target bit in the group of first target bits.

For example, the access code is divided into two subcode segments. If the receiving device 120 determines, based on the check result, that the data frame is correctly received, the receiving device 120 may determine that the group of first target bits used for encoding is "00". The receiving device 120 may encode a first subcode segment in the two subcode segments by using "0", and encode a second subcode segment in the two subcode segments by using "0".

Similarly, if the receiving device 120 determines, based on the check result, that the data frame is not correctly received, the receiving device 120 may determine that the group of first target bits used for encoding is "01". The receiving device 120 may encode a first subcode segment in the two subcode segments by using "0", and encode a second subcode segment in the two subcode segments by using "1".

In some embodiments, in an encoding process, the receiving device 120 may perform encoding by performing a logical operation on the target bit in the group of first target bits and each element in the corresponding subcode segment in the plurality of subcode segments. The logical operation may include, for example, an XNOR operation, an XOR operation, an AND operation, and a NOT operation.

In some embodiments, in addition to encoding the subcode segment of the access code, it may also be possible to encode a modulated access code. For example, the receiving device 120 may modulate original bit data included in the access code to obtain modulated bit data of the access code, where the modulated bit data of the access code is also referred to as symbol data. For example, after PSK modulation, the original bit data may become constellation point symbols in a constellation diagram. The receiving device 120 may further segment the modulated bit data of the access code, and then encode a plurality of segments of the modulated bit data of the access code in the manner described above.

In this case, during the encoding of the plurality of segments of the modulated bit data of the access code by using the group of first target bits described above, an in-phase or inverted operation may be performed on sign bits of a corresponding segment in the plurality of segments of the modulated bit data of the access code by using one target bit in the group of first target bits.

For the foregoing two solutions of encoding bit data of a subcode segment of an access code to indicate, in a feedback frame, whether a data frame is correctly received, and segmenting modulated symbol data and performing encoding by using a target bit to indicate, in a feedback frame, whether a data frame is correctly received, the following further describes the solutions with reference to FIG. 4 to FIG. 6. For description coherence, the following continues to describe the example process 200 for short-range wireless communication with reference to FIG. 2.

In 215, the receiving device 120 may send the generated feedback frame to the sending device 110. In 220, the sending device 110 may determine, based on the first indication information in the feedback frame, whether the receiving device 120 correctly receives the previously sent data frame.

In some embodiments, the sending device 110 may demodulate or extract the first indication information in the feedback frame, to obtain a group of first target bits used by the receiving device to encode the access code, so as to determine whether the data frame is correctly received by the receiving device 120.

For example, the access code is still divided into two subcode segments. As described above, if the sending device 110 determines that the group of first target bits is "00", the sending device 110 may determine that the data frame is correctly received by the receiving device 120. If the sending device 110 determines that the group of first target bits is "01", the sending device 110 may determine that the data frame is not correctly received by the receiving device 120.

If the sending device 110 determines that the data frame is not correctly received by the receiving device 120, the sending device 110 may retransmit the previously sent data frame to the receiving device 120 in 225.

As described above, the receiving device 120 may perform accumulation and combination on data of the same frame retransmitted for a plurality of times, to reduce a loss and distortion caused by noise in a transmission process. Therefore, the sending device 110 needs to indicate, for the retransmitted data frame, to the receiving device 120 whether packet header information of the retransmitted data frame changes, so that the receiving device 120 can determine whether a data field in a subsequently received data frame can be combined with a data field in the previously received data frame.

Similarly, the sending device 110 may encode the access code in the retransmitted data frame, to indicate whether the packet header information in the retransmitted data frame changes. Similar to the method already described above, the sending device 110 may obtain a group of second target bits, and generate second indication information by encoding, by using the group of second target bits, a plurality of subcode segments into which the access code in the retransmitted data frame is divided, where the second indication information may indicate whether the packet header information changes.

For example, the access code is still divided into two subcode segments. If the sending device 110 determines that the packet header information in the data frame is not changed, the sending device 110 may determine that the group of second target bits used for encoding is "00". The sending device 110 may encode a first subcode segment in the two subcode segments by using "0", and encode a second subcode segment in the two subcode segments by using "0".

Similarly, if the sending device 110 determines that the packet header information in the data frame is changed, the sending device 110 may determine that the group of second target bits used for encoding is "01". The sending device 110 may encode a first subcode segment in the two subcode segments by using "0", and encode a second subcode segment in the two subcode segments by using "0".

In some embodiments, in an encoding process, the sending device 110 may perform encoding by performing a logical operation on the target bit in the group of first target bits and each element in the corresponding subcode segment in the plurality of subcode segments. The logical operation may include, for example, an XNOR operation, an XOR operation, an AND operation, and a NOT operation.

After receiving the retransmitted data frame, the receiving device 120 may check the retransmitted data frame again. Based on a check result, in 230, the receiving device 120 determines whether the data frame retransmitted this time is correctly received. After determining whether the data frame retransmitted this time is correctly received, the receiving device 120 may indicate, in a feedback frame for the data frame retransmitted this time, to the sending device 110 whether the data frame retransmitted this time is correctly received. The manner of indicating, in the feedback frame, whether the data frame retransmitted this time is correctly received has been described in detail in the action 210 in the process 200 for short-range wireless communication described above. Therefore, details are not repeated.

If the receiving device 120 determines that the retransmitted data frame can be correctly received, the receiving device 120 determines whether a data field in the retransmitted data frame can be combined with a data field in the previously received data frame.

In some embodiments, the receiving device 120 may obtain the second indication information from the access code in the retransmitted data frame. By decoding the second indication information, the receiving device 120 may obtain the group of second target bits used by the sending device to encode the access code, to determine whether the data frame is correctly received by the receiving device 120.

In some embodiments, for example, the access code is still divided into two subcode segments. If the receiving device 120 determines that the group of second target bits is "00", it is determined that the packet header information in the retransmitted data frame is not changed. If the receiving device 120 determines that the group of second target bits is "01", it is determined that the packet header information in the retransmitted data frame is changed.

In some embodiments, if the receiving device 120 determines that the packet header information in the retransmitted data frame is changed, the receiving device 120 does not combine the data field in the retransmitted data frame with the data field in the previously received data frame. On the contrary, if the receiving device 120 determines that the packet header information in the retransmitted data frame is not changed, the receiving device 120 may combine the data field in the retransmitted data frame with the data field in the previously received data frame.

In some embodiments, when channel encoding is used for data, to perform rate matching, some encoding schemes have several different redundancy versions. When retransmission occurs, a redundancy version of the data field also changes. If redundancy version information is included in the packet header, a corresponding bit in the packet header changes during retransmission. In this case, it is difficult to combine packet headers. In some embodiments, it may be configured that a corresponding redundancy version is used based on a quantity of retransmission times in a retransmission process. In addition, in some embodiments, the redundancy version information may not be included in the packet header information. Therefore, when retransmission occurs, the packet header information does not need to be changed due to different redundancy versions.

In 235, the receiving device 120 sends the feedback frame for the retransmitted data frame to the sending device 110. In 240, the sending device 110 may determine, based on the received feedback frame, whether the retransmitted data frame is correctly received by the receiving device 120. If the sending device 110 determines that the retransmitted data frame is correctly received by the receiving device 120, the sending device 110 may send a next data frame in 245. If the sending device 110 determines that the retransmitted data frame is not correctly received by the receiving device 120, the sending device 110 may retransmit the previous data frame again in 245.

The access code of the data frame may indicate "whether the data frame is correctly received by the receiving device" and also indicate "whether the packet header information in the retransmitted data frame is changed". Therefore, scheduling time for sending the two indications needs to be configured.

In some embodiments, especially in a unidirectional transmission scenario, roles of the sending device and the receiving device are not interchanged. A transmission link from the sending device 110 to the receiving device 120 may be configured as a downlink, and a transmission link from the receiving device 120 to the sending device 110 may be configured as an uplink. Therefore, it may be configured that: in the downlink, the sending device 110 indicates, in the access code of the data frame, "whether the packet header information in the retransmitted data frame is changed"; and in the uplink, the receiving device 120 indicates, in an access code of the feedback frame, "whether the data frame is correctly received by the receiving device".

In some embodiments, especially in a bidirectional transmission scenario, roles of the sending device and the receiving device may be interchanged. In this case, a feedback slot of the receiving device may be configured. In the slot, indication information in a feedback frame indicates "whether a data frame is correctly received by the receiving device". To reduce overheads and power consumption, only two fields, namely, a preamble and an access code, are transmitted in the slot. In other slots, normal transmission is performed, and a frame format includes all fields. In this case, indication information in a data frame indicates "whether packet header information in a retransmitted data frame is changed".

With reference to FIG. 4 to FIG. 6, the following further describes example schematic diagrams of the foregoing two solutions of encoding bit data of a subcode segment of an access code, and segmenting modulated symbol data and performing encoding by using a target bit.

FIG. 4 is a schematic diagram of a scenario in which bit data of a subcode segment of an access code is encoded according to an embodiment of the present disclosure. As shown in FIG. 4, in the scenario in which bit data of a subcode segment of an access code is encoded, for example, an XOR operation may be performed on a first-part subcode segment 412 of the access code and a target bit 421 through an XOR element 441, to obtain a code of the first-part subcode segment 412 of the access code, and for example, an XOR operation may be performed on a second-part subcode segment 414 of the access code and a target bit 422 through an XOR element 442, to obtain a code of the second-part subcode segment 412 of the access code. The code of the first-part subcode segment 412 of the access code may be transmitted through a modulation transmitting element 451. The code of the second-part subcode segment 412 of the access code may be transmitted through a modulation transmitting element 452. It should be understood that, in FIG. 4, the XOR elements 441 and 442 may be considered as a same component, and the modulation transmitting elements 451 and 452 may also be considered as a same component.

It should be understood that the XOR elements 441 and 442 in FIG. 4 may also be configured as an element that can perform other logical operations.

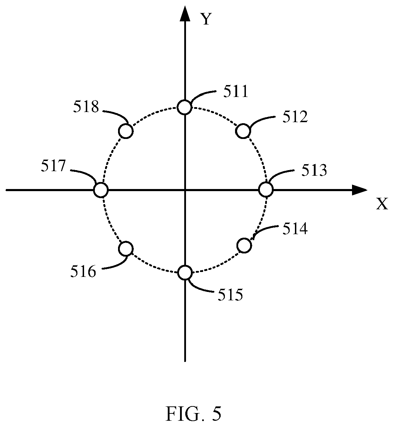

In a scenario in which the modulated symbol data is segmented and encoding is performed by using the target bit, after original bit data of the access code is modulated, the modulated bit data may be mapped to constellation points in a constellation diagram, and each constellation point is a symbol. FIG. 5 shows example constellation points of modulated bit data in a constellation diagram. An 8PSK modulation scheme is used as an example. There are eight constellation points in total: constellation points 511 to 518. Every three bits correspond to one constellation point symbol. To be specific, the constellation point 511 corresponds to "0,1,1", the constellation point 512 corresponds to "0,0,1", the constellation point 513 corresponds to "0,0,0", the constellation point 514 corresponds to "1,0,0", the constellation point 515 corresponds to "1,0,1", the constellation point 516 corresponds to "1,1,1", the constellation point 517 corresponds to "1,1,0", and the constellation point 518 corresponds to "0,1,0". In a two-dimensional coordinate diagram, each constellation point symbol has its own amplitude and phase. In other words, each symbol is determined by its amplitude and phase.

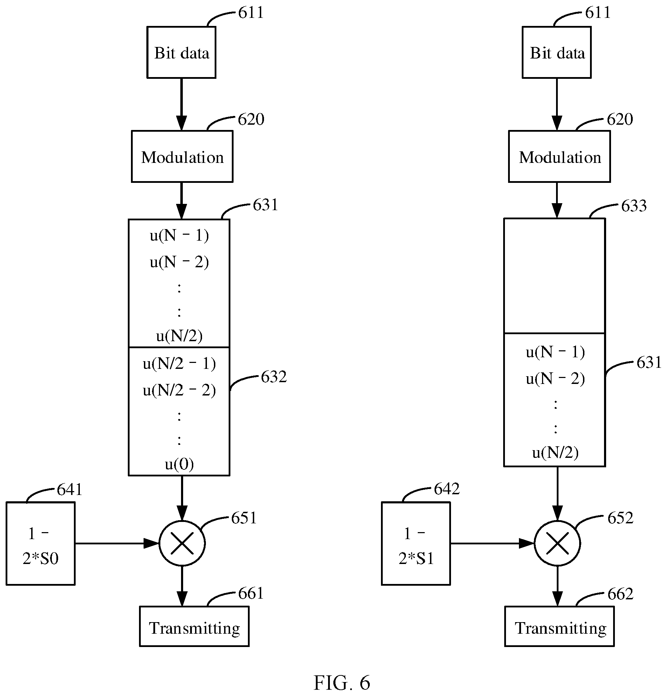

FIG. 6 is a schematic diagram of a scenario in which modulated symbol data is segmented and encoded according to an embodiment of the present disclosure. As shown in FIG. 6, in the scenario in which modulated symbol data is segmented, original bit data 611 of an access code may be modulated through a modulation element 620, to generate symbol data that can be sent. For example, after PSK modulation, the data becomes constellation point symbols in a constellation diagram.

Then, the symbol data is segmented, and the symbol data in each segment is encoded. That is, an in-phase or inverted operation is performed. If a target bit is 0, a phase remains unchanged. If a target bit is 1, a phase is inverted by 180 degrees. In FIG. 6, for example, an in-phase or inverted operation may be performed on a first-part subcode segment 632 of the access code and a target bit 641 through a multiplier 651, to obtain a code of the first-part subcode segment 632 of the access code, and for example, an in-phase or inverted operation may be performed on a second-part subcode segment 634 of the access code and a target bit 642 through a multiplier 652, to obtain a code of the second-part subcode segment 634 of the access code. The code of the first-part subcode segment 632 of the access code may be transmitted through a transmitting element 661. The code of the second-part subcode segment 634 of the access code may be transmitted through a transmitting element 652. It should be understood that in FIG. 6, the multipliers 651 and 652 may be considered as a same component, and the transmitting elements 661 and 662 may also be considered as a same component.

According to the method described above, an existing bottleneck problem of a packet header during retransmission and combination is avoided, a signal-to-noise ratio during retransmission and combination is greatly improved, and lower sensitivity is implemented. In addition, when no additional overheads are generated, receiving performance during retransmission and combination in a strong interference environment is greatly improved, and anti-interference performance of a receiver is significantly improved.

It should be understood that, although the foregoing descriptions include some specific implementation details, this should not be construed as limiting the scope of any invention or claims, but rather as descriptions of specific example embodiments that may be specific to a particular invention. Some features described in this specification in the context of separate example embodiments may alternatively be integrated into and implemented in a single example embodiment. On the contrary, various features described in the context of a single example embodiment may alternatively be implemented separately in a plurality of example embodiments or in any appropriate sub-combination.

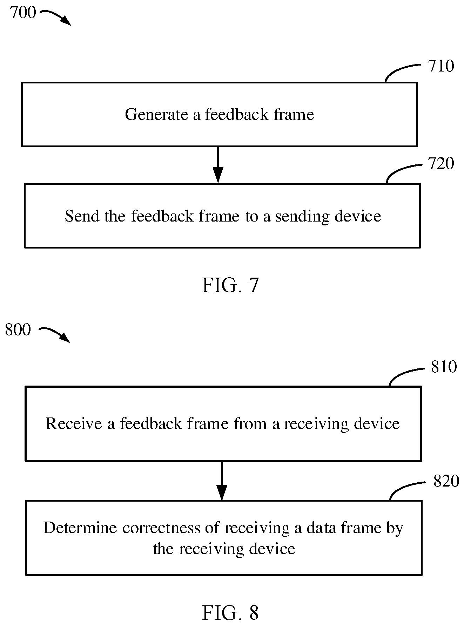

FIG. 7 is a flowchart of a method 700 for short-range wireless communication according to an example embodiment of the present disclosure. The method 700 may be implemented by the receiving device 120 shown in FIG. 1. For ease of discussion, the following describes the method 700 with reference to FIG. 1. It should be understood that the method 700 is also applicable to another communication scenario and device.

710: The receiving device 120 generates a feedback frame in response to receiving a data frame. The feedback frame includes first indication information. The first indication information is obtained after the receiving device encodes an access code of a sending device in the data frame, the first indication information indicates whether the data frame is correctly received, and the first indication information is indicated in a part other than a packet header field and a data field in the feedback frame.

In some example embodiments, the receiving device may check the received data frame. The receiving device generates the first indication information by encoding the access code in the data frame based on a check result, and generates the feedback frame based on the first indication information.

In some example embodiments, the receiving device may divide the access code into a plurality of subcode segments, and determine a group of first target bits based on the check result. One reference bit in the first target bits corresponds to one subcode segment in the plurality of subcode segments. In addition, the receiving device may encode a corresponding subcode segment in the plurality of subcode segments by using one first target bit in the group of first target bits, and generate the first indication information based on a plurality of encoded subcode segments.

In some example embodiments, the receiving device performs encoding by performing a logical operation on the first target bit in the plurality of first target bits and the corresponding subcode segment in the plurality of subcode segments.

In some example embodiments, the receiving device obtains a plurality of groups of reference bits; and in response to determining, based on the check result, that the data frame is correctly received, determines, as a group of first target bits, a first reference bit that is in the plurality of groups of reference bits and that corresponds to correct receiving.

In some example embodiments, the receiving device may obtain a plurality of groups of reference bits; and in response to determining, based on the check result, that the data frame is not correctly received, determine, as a group of first target bits, a second reference bit that is in the plurality of groups of reference bits and that corresponds to incorrect receiving.

In some example embodiments, the receiving device may further receive a retransmitted data frame from the sending device. The receiving device may obtain second indication information from the retransmitted data frame. The second indication information is obtained after the sending device encodes the access code of the sending device in the retransmitted data frame, and the second indication information indicates whether packet header information in the retransmitted data frame is consistent with packet header information in the previously received data frame. The receiving device may determine a data combination possibility of the retransmitted data frame and the previously received data frame based on the second indication information.

In some example embodiments, the receiving device may determine a group of second target bits by decoding the second indication information. The second indication information is obtained after the sending device encodes the access code by using the group of second target bits. If it is determined that the packet header information is changed, the receiving device determines that the retransmitted data frame is not combined with data of the previously received data frame.

In some example embodiments, if it is determined that the packet header information is not changed, the receiving device determines that the retransmitted data frame is combined with the data of the previously received data frame.

720: The receiving device sends the feedback frame to the sending device.

In some example embodiments, if it is determined that the data frame is received on a downlink from the sending device to the receiving device, the receiving device may send the feedback frame on an uplink from the receiving device to the sending device.

In some example embodiments, the receiving device may send the feedback frame at a time interval dedicated to sending a feedback frame.

FIG. 8 is a flowchart of a method 800 for short-range wireless communication according to an example embodiment of the present disclosure. The method 800 may be implemented by the sending device 110 shown in FIG. 1. For ease of discussion, the following describes the method 800 with reference to FIG. 1. It should be understood that the method 700 is also applicable to another communication scenario and device.

810: The sending device 110 receives a feedback frame for a data frame from a receiving device. The feedback frame includes first indication information. The first indication information is obtained after the receiving device encodes an access code of the sending device in the data frame, the first indication information indicates whether the data frame is correctly received, and the first indication information is indicated in a part other than a packet header field and a data field in the feedback frame.

820: The sending device 110 determines, based on the first indication information, correctness of receiving the data frame by the receiving device.

In some example embodiments, the sending device determines a group of first target bits by decoding the first indication information, where the first indication information is obtained after the receiving device encodes the access code by using the group of first target bits; and determines, based on the group of first target bits, correctness of receiving the data frame by the receiving device.

In some example embodiments, if it is determined that the data frame is not correctly received by the receiving device, the sending device sends a retransmitted data frame to the receiving device. The retransmitted data frame includes second indication information. The second indication information is obtained after the sending device encodes the access code of the sending device in the retransmitted data frame, and the second indication information indicates whether packet header information in the retransmitted data frame is consistent with packet header information in the previously received data frame.

In some example embodiments, if it is determined that the data frame is not correctly received by the receiving device, the sending device determines a group of second target bits. The sending device generates the second indication information by encoding the access code by using the group of second target bits; and generates the retransmitted data frame based on the second indication information.

In some example embodiments, if it is determined that the data frame is received on a downlink from the sending device to the receiving device, the sending device may send the feedback frame on an uplink from the receiving device to the sending device.

In some example embodiments, the sending device may send the feedback frame at a time interval dedicated to sending a feedback frame.

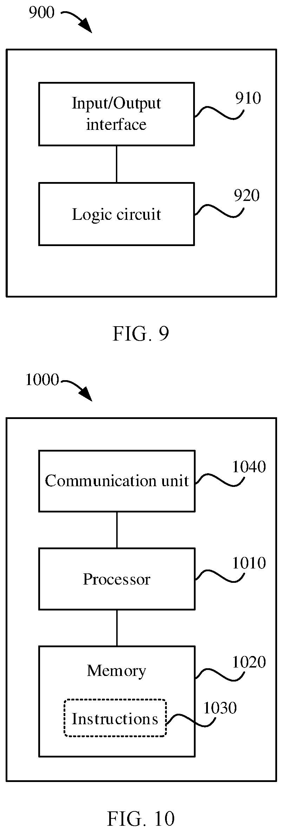

FIG. 9 is a block diagram of a communication apparatus 900 according to an example embodiment of the present disclosure. The communication apparatus 900 may be implemented as the sending device 110, the receiving device 120, some of the foregoing devices, a chip in the foregoing devices, or the like shown in FIG. 1. It should be understood that the communication apparatus 900 is used for example purposes only and does not imply any limitation on the scope of the present disclosure. Embodiments of the present disclosure may be further embodied in different communication apparatuses. In addition, it should be further understood that the communication apparatus 900 may include other elements, modules, or entities, which are not shown for clarity purposes. However, it does not mean that the embodiments of the present disclosure do not have these elements or entities. The scope of the present disclosure is not limited in this respect.

As shown in FIG. 9, the communication apparatus 900 includes an input/output interface 910 and a logic circuit 920. The input/output interface 910 is coupled to the logic circuit 920. In this embodiment of the present disclosure, the input/output interface 910 may be integrated to implement sending and receiving functions, or may be separately implemented as independent components: an input interface for receiving and an output interface for sending. For example, the input/output interface 1010 shown in FIG. 9 is an implementation of the integrated example.

In an embodiment in which the communication apparatus 900 is implemented as the receiving device 120 shown in FIG. 1, the input/output interface 910 may be configured to send a feedback frame to the sending device. The logic circuit 920 may be configured to generate the feedback frame in response to receiving a data frame. The feedback frame includes first indication information. The first indication information is obtained after the receiving device encodes an access code of the sending device in the data frame, the first indication information indicates whether the data frame is correctly received, and the first indication information is indicated in a part other than a packet header field and a data field in the feedback frame.

In some example embodiments, the logic circuit 920 may be further configured as a processing unit and is further configured to: check the received data frame; generate the first indication information by encoding the access code in the data frame based on a check result; and generate the feedback frame based on the first indication information.

In some example embodiments, the logic circuit 920 may be further configured to: divide the access code into a plurality of subcode segments; determine a group of first target bits based on the check result, where one reference bit in the first target bits corresponds to one subcode segment in the plurality of subcode segments; encode a corresponding subcode segment in the plurality of subcode segments by using one first target bit in the group of first target bits; and generate the first indication information based on a plurality of encoded subcode segments.

In some example embodiments, the logic circuit 920 may be further configured to perform encoding by performing a logical operation on the first target bit in the plurality of first target bits and the corresponding subcode segment in the plurality of subcode segments.

In some example embodiments, the logic circuit 920 may be further configured to: obtain a plurality of groups of reference bits; and in response to determining, based on the check result, that the data frame is correctly received, determine, as a group of first target bits, a first reference bit that is in the plurality of groups of reference bits and that corresponds to correct receiving.

In some example embodiments, the logic circuit 920 may be further configured to: obtain a plurality of groups of reference bits; and in response to determining, based on the check result, that the data frame is not correctly received, determine, as a group of first target bits, a second reference bit that is in the plurality of groups of reference bits and that corresponds to incorrect receiving.

In some example embodiments, the input/output interface 910 may be further configured to receive a retransmitted data frame from the sending device, and the logic circuit 920 may be further configured to: obtain second indication information from the retransmitted data frame, where the second indication information is obtained after the sending device encodes the access code of the sending device in the retransmitted data frame, and the second indication information indicates whether packet header information in the retransmitted data frame is consistent with packet header information in the previously received data frame; and determine a data combination possibility of the retransmitted data frame and the previously received data frame based on the second indication information.

In some example embodiments, the logic circuit 920 may be further configured to: determine a group of second target bits by decoding the second indication information, where the second indication information is obtained after the sending device encodes the access code by using the group of second target bits; and if it is determined that the packet header information is changed, determine that the retransmitted data frame is not combined with data of the previously received data frame.

In some example embodiments, the logic circuit 920 may be further configured to: if it is determined that the packet header information is not changed, determine that the retransmitted data frame is combined with the data of the previously received data frame.

In some example embodiments, the input/output interface 910 may be further configured to: if it is determined that the data frame is received on a downlink from the sending device to the receiving device, send the feedback frame on an uplink from the receiving device to the sending device.

In some example embodiments, the input/output interface 910 may be further configured to send the feedback frame at a time interval dedicated to sending a feedback frame.

In an embodiment in which the communication apparatus 900 is implemented as the sending device 110 shown in FIG. 1, the input/output interface 910 may be configured to receive a feedback frame for a data frame from the receiving device. The feedback frame includes first indication information. The first indication information is obtained after the receiving device encodes an access code of the sending device in the data frame, the first indication information indicates whether the data frame is correctly received, and the first indication information is indicated in a part other than a packet header field and a data field in the feedback frame. The logic circuit 920 may be configured to determine, based on the first indication information, correctness of receiving the data frame by the receiving device.

In some example embodiments, the logic circuit 920 may be further configured to: determine a group of first target bits by decoding the first indication information, where the first indication information is obtained after the receiving device encodes the access code by using the group of first target bits; and determine, based on the group of first target bits, correctness of receiving the data frame by the receiving device.

In some example embodiments, the logic circuit 920 may be further configured to: if it is determined that the data frame is not correctly received by the receiving device, send a retransmitted data frame to the receiving device. The retransmitted data frame includes second indication information. The second indication information is obtained after the sending device encodes the access code of the sending device in the retransmitted data frame, and the second indication information indicates whether packet header information in the retransmitted data frame is consistent with packet header information in the previously received data frame.

In some example embodiments, the logic circuit 920 may be further configured to: if it is determined that the data frame is not correctly received by the receiving device, determine a group of second target bits. The sending device generates the second indication information by encoding the access code by using the group of second target bits; and generates the retransmitted data frame based on the second indication information.

In some example embodiments, the input/output interface 910 may be further configured to: if it is determined that the data frame is received on a downlink from the sending device to the receiving device, send the feedback frame on an uplink from the receiving device to the sending device.

In some example embodiments, the input/output interface 910 may be further configured to send the feedback frame at a time interval dedicated to sending a feedback frame.

It should be understood that the communication apparatus 1000 in FIG. 9 can be configured to execute the processes implemented by the sending device 110 and the receiving device 120 in the foregoing embodiments with reference to FIG. 2 to FIG. 8. To avoid repetition, details are not described herein again.

FIG. 10 is a block diagram of a communication apparatus 1000 that may implement some embodiments of the present disclosure. The communication apparatus 1000 can be configured to implement the sending device 110 and the receiving device 120 shown in FIG. 1. The communication apparatus 1000 may alternatively be implemented as a chip or a chip system. It should be understood that the communication apparatus 1000 is used for example purposes only and does not imply any limitation on the scope of the present disclosure. Embodiments of the present disclosure may be further embodied in different devices. It should be further understood that the communication apparatus 1000 may include other elements or entities, which are not shown for ease of description. However, it does not mean that the embodiments of the present disclosure do not have these elements or entities.

As shown in FIG. 10, the communication apparatus 1000 includes a processor 1010, and the processor 1010 controls an operation and a function of the communication apparatus 1000. For example, in some example embodiments, the processor 1010 may perform various operations by using instructions 1030 stored in a memory 1020 coupled to the processor 1010. The memory 1020 may be of any appropriate type applicable to a local technical environment, and may be implemented by using any appropriate data storage technology, and includes but is not limited to a semiconductor-based storage device, a magnetic storage device and system, and an optical storage device and system. Although only one memory unit is shown in FIG. 10, there may be a plurality of physically different memory units in the communication apparatus 1000. It should be understood that the processor 1010 and the memory 1020 may be disposed separately as independent components, or may be integrated together. This is not limited in this application.

The processor 1010 may be of any appropriate type applicable to a local technical environment, and may include but not be limited to one or more of the following: a general-purpose computer, a dedicated computer, a microcontroller, a digital signal controller (Digital Signal Processor, DSP), and a controller-based multi-core controller architecture. The communication apparatus 1000 may alternatively include a plurality of processors, such as an application-specific integrated circuit chip, which in time belongs to a clock synchronized with a main processor. The processor 1010 is coupled to a communication unit 1040. The communication unit 1040 may receive and send information via a radio signal, an optical fiber, a cable, and/or another component.

The memory 1020 may include one or more non-volatile memories and one or more volatile memories. For example, the non-volatile memory includes but is not limited to a read-only memory (Read-Only Memory, ROM), an erasable programmable read-only memory (Erasable Programmable Read-Only Memory, EPROM), a flash memory, a hard disk drive, a compact disc (Compact Disc, CD), a digital versatile disc (Digital Versatile Disc, DVD), or another magnetic storage and/or optical storage. For example, the volatile memory includes but is not limited to a random access memory (Random Access Memory, RAM) and the like.

Embodiments of the present disclosure may be implemented by using a computer program, so that the communication apparatus 1000 may perform any process discussed with reference to FIG. 2 to FIG. 9. Embodiments of the present disclosure may alternatively be implemented by hardware or by a combination of software and hardware. The computer program includes the computer-executable instructions 1030 executed by the processor 1010. The computer program may be stored in the memory 1020. The processor 1010 may perform any appropriate action and processing by loading the computer program to the RAM.

In the foregoing described embodiments in which the sending device 110 and the receiving device 120 determine an adjustment parameter by using machine learning algorithm modules, reinforcement learning models, or the like, these modules and models may be stored in the memory 1020 in a manner of computer program code or the instructions 1030, and the processor executes the program code or the instructions in the memory 1020 to enable the communication apparatus 1000 to perform the processing processes implemented by the sending device 110 and the receiving device 120 in FIG. 2 to FIG. 8.

In some embodiments, the computer program may be tangibly included in a computer-readable medium. The computer-readable medium may be included in the communication apparatus 1000 (for example, in the memory 1020) or another storage device that may be accessed by the communication apparatus 1000. The computer program may be loaded from the computer-readable medium to the RAM for execution. The computer-readable medium may include any type of tangible non-volatile memory, for example, an ROM, an EPROM, a flash memory, a hard disk drive, a CD, or a DVD.

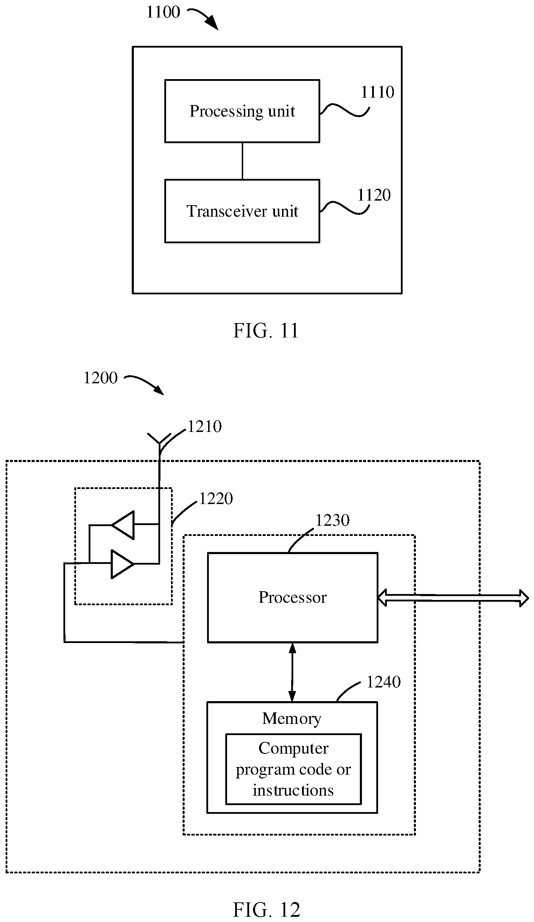

FIG. 11 is a block diagram of a communication apparatus according to an example embodiment of the present disclosure. As shown in FIG. 11, the communication apparatus 1100 includes a processing unit 1110 and a transceiver unit 1120. The communication apparatus 1100 is configured to implement a function of the terminal device or the base station device in the method embodiments shown in FIG. 7 to FIG. 8. The processing unit 1110 may perform internal processing. The transceiver unit 1120 may communicate with the outside. The transceiver unit 1120 may also be referred to as a communication interface, an input/output interface, or the like. For example, the transceiver unit 1120 may include a sending unit and a receiving unit. The sending unit is configured to perform a sending operation of the terminal device or the base station device in the foregoing method embodiments. The receiving unit is configured to perform a receiving operation or the like of the terminal device or the base station device in the foregoing method embodiments.

When the communication apparatus 1100 is configured to implement a function of the receiving device 110 in the method embodiment shown in FIG. 7, the transceiver unit 1120 is configured to send a feedback frame to a sending device in response to receiving a data frame. The processing unit 1110 is configured to generate the feedback frame in response to receiving the data frame. The feedback frame includes first indication information. The first indication information is obtained after the receiving device encodes an access code of the sending device in the data frame, the first indication information indicates whether the data frame is correctly received, and the first indication information is indicated in a part other than a packet header field and a data field in the feedback frame.

When the communication apparatus 1100 is configured to implement a function of the receiving device 110 in the method embodiment shown in FIG. 7, the processing unit 1110 is configured to: check the received data frame; generate the first indication information by encoding the access code in the data frame based on a check result; and generate the feedback frame based on the first indication information.

When the communication apparatus 1100 is configured to implement a function of the receiving device 110 in the method embodiment shown in FIG. 7, the processing unit 1110 is configured to: divide the access code into a plurality of subcode segments; determine a group of first target bits based on the check result, where one reference bit in the first target bits corresponds to one subcode segment in the plurality of subcode segments; encode a corresponding subcode segment in the plurality of subcode segments by using one first target bit in the group of first target bits; and generate the first indication information based on a plurality of encoded subcode segments.

When the communication apparatus 1100 is configured to implement a function of the receiving device 110 in the method embodiment shown in FIG. 7, the processing unit 1110 is configured to perform encoding by performing a logical operation on the first target bit in the plurality of first target bits and the corresponding subcode segment in the plurality of subcode segments.

When the communication apparatus 1100 is configured to implement a function of the receiving device 110 in the method embodiment shown in FIG. 7, the processing unit 1110 is configured to: obtain a plurality of groups of reference bits; and in response to determining, based on the check result, that the data frame is correctly received, determine, as a group of first target bits, a first reference bit that is in the plurality of groups of reference bits and that corresponds to correct receiving.

When the communication apparatus 1100 is configured to implement a function of the receiving device 110 in the method embodiment shown in FIG. 7, the processing unit 1110 is configured to: obtain a plurality of groups of reference bits; and in response to determining, based on the check result, that the data frame is not correctly received, determine, as a group of first target bits, a second reference bit that is in the plurality of groups of reference bits and that corresponds to incorrect receiving.

When the communication apparatus 1100 is configured to implement a function of the receiving device 110 in the method embodiment shown in FIG. 7, the transceiver unit 1120 is configured to receive a retransmitted data frame, and the processing unit 1110 is configured to: obtain second indication information from the retransmitted data frame, where the second indication information is obtained after the sending device encodes the access code of the sending device in the retransmitted data frame, and the second indication information indicates whether packet header information in the retransmitted data frame is consistent with packet header information in the previously received data frame; and determine a data combination possibility of the retransmitted data frame and the previously received data frame based on the second indication information.

When the communication apparatus 1100 is configured to implement a function of the receiving device 110 in the method embodiment shown in FIG. 7, the processing unit 1110 is configured to: determine a group of second target bits by decoding the second indication information, where the second indication information is obtained after the sending device encodes the access code by using the group of second target bits; and if it is determined that the packet header information is changed, determine that the retransmitted data frame is not combined with data of the previously received data frame.

When the communication apparatus 1100 is configured to implement a function of the receiving device 110 in the method embodiment shown in FIG. 7, the processing unit 1110 is configured to: if it is determined that the packet header information is not changed, determine that the retransmitted data frame is combined with the data of the previously received data frame.

When the communication apparatus 1100 is configured to implement a function of the receiving device 110 in the method embodiment shown in FIG. 7, the transceiver unit 1120 is configured to: if it is determined that the data frame is received on a downlink from the sending device to the receiving device, send the feedback frame on an uplink from the receiving device to the sending device.

When the communication apparatus 1100 is configured to implement a function of the receiving device 110 in the method embodiment shown in FIG. 7, the transceiver unit 1120 is configured to send the feedback frame at a time interval dedicated to sending a feedback frame.

When the communication apparatus 1100 is configured to implement a function of the sending device 110 in the method embodiment shown in FIG. 8, the transceiver unit 1120 is configured to receive a feedback frame for a data frame from a receiving device. The feedback frame includes first indication information. The first indication information is obtained after the receiving device encodes an access code of the sending device in the data frame, the first indication information indicates whether the data frame is correctly received, and the first indication information is indicated in a part other than a packet header field and a data field in the feedback frame. The processing unit 1110 is configured to determine, based on the first indication information, correctness of receiving the data frame by the receiving device.

When the communication apparatus 1100 is configured to implement a function of the sending device 110 in the method embodiment shown in FIG. 8, the processing unit 1110 is configured to: determine a group of first target bits by decoding the first indication information, where the first indication information is obtained after the receiving device encodes the access code by using the group of first target bits; and determine, based on the group of first target bits, correctness of receiving the data frame by the receiving device.

When the communication apparatus 1100 is configured to implement a function of the sending device 110 in the method embodiment shown in FIG. 8, the processing unit 1110 is configured to: if it is determined that the data frame is not correctly received by the receiving device, send a retransmitted data frame to the receiving device. The retransmitted data frame includes second indication information. The second indication information is obtained after the sending device encodes the access code of the sending device in the retransmitted data frame, and the second indication information indicates whether packet header information in the retransmitted data frame is consistent with packet header information in the previously received data frame.

When the communication apparatus 1100 is configured to implement a function of the sending device 110 in the method embodiment shown in FIG. 8, the processing unit 1110 is configured to: if it is determined that the data frame is not correctly received by the receiving device, determine a group of second target bits. The sending device generates the second indication information by encoding the access code by using the group of second target bits; and generates the retransmitted data frame based on the second indication information.

When the communication apparatus 1100 is configured to implement a function of the sending device 110 in the method embodiment shown in FIG. 8, the transceiver unit 1120 is configured to: if it is determined that the feedback frame is received on an uplink from the receiving device to the sending device, send the retransmitted data frame on a downlink from the sending device to the receiving device.

When the communication apparatus 1100 is configured to implement a function of the sending device 110 in the method embodiment shown in FIG. 8, the transceiver unit 1120 is configured to send the retransmitted data frame at another time interval other than a time interval dedicated to sending a feedback frame.

For more detailed descriptions of the processing unit 1110 and the transceiver unit 1120, directly refer to related descriptions in the method embodiments shown in FIG. 7 and FIG. 8. Details are not described herein.

FIG. 12 is a block diagram of a communication apparatus according to an example embodiment of the present disclosure. As shown in FIG. 12, a possible schematic diagram of a base station device or terminal device 1200 is provided, including an antenna 1210, a signal transceiver unit 1220, a processor 1230, and a memory 1240. The memory 1240 is configured to store computer program code, instructions, or the like. The processor 1230 is configured to execute the program or the instructions, to implement operations of the terminal device or the base station device in the method embodiments shown in FIG. 7 to FIG. 8. It may be understood that the signal transceiver unit may be a transceiver, including a transmitter and a receiver. The transmitter may send a signal to another device, for example, a base station device or a terminal device. The receiver may receive a signal from another device, for example, a core network device, a base station device, or a terminal device.

In general, various example embodiments of the present disclosure may be implemented in hardware or dedicated circuit, software, logic, or any combination thereof. Some aspects may be implemented in hardware, while other aspects may be implemented in firmware or software that may be executed by a controller, a microprocessor, or another computing device. When aspects of the example embodiments of the present disclosure are illustrated or described as block diagrams or flowcharts, or represented using specific other figures, it may be understood that the blocks, apparatuses, systems, technologies, or methods described herein may be implemented as non-limiting examples in hardware, software, firmware, dedicated circuit or logic, general-purpose hardware or controllers, or other computing devices, or some combinations thereof.

In an example, example embodiments of the present disclosure may be described in a context of machine-executable or computer-executable instructions. The machine-executable instructions are, for example, included in a program module executed in a device on a target real or virtual processor. The program module usually includes a routine, a program, a library, an object, a class, a component, a data structure, and the like, and executes a specific task or implements a specific abstract data structure. In various example embodiments, functions of program modules may be combined or split between the described program modules. The machine-executable instructions for the program module may be executed locally or within a distributed device. In the distributed device, the program module may be located in both a local storage medium and a remote storage medium.

Computer program code for implementing the method in the present disclosure may be written in one or more programming languages. The computer program code may be provided to a processor of a general-purpose computer, a dedicated computer, or another programmable data processing apparatus. In this way, when the program code is executed by the computer or the another programmable data processing apparatus, functions/operations specified in the flowcharts and/or block diagrams are implemented. The program code may be executed all on a computer, partially on a computer, as an independent software package, partially on a computer and partially on a remote computer, or all on a remote computer or server.

In the context of the present disclosure, the computer program code or related data may be carried by any appropriate carrier, so that the device, the apparatus, or the processor can perform various processing and operations described above. For example, the carrier includes a signal, a computer-readable medium, and the like. For example, the signal may include propagating signals in electrical, optical, radio, sound, or other forms, such as carrier waves and infrared signals.

In the context of the present disclosure, a machine-readable medium or a computer-readable medium may be any tangible medium that includes or stores a program for or has a program related to an instruction execution system, apparatus, or device. The machine-readable medium may be a machine-readable signal medium or a machine-readable storage medium. The machine-readable medium may include but be not limited to an electronic, magnetic, optical, electromagnetic, infrared, or semiconductor system, apparatus, or device, or any appropriate combination thereof. In a more detailed example, the machine-readable storage medium includes an electrical connection with one or more wires, a portable computer disk, a hard disk drive, a random access memory (RAM), a read-only memory (ROM), an erasable programmable read-only memory (EPROM or flash memory), an optical storage device, a magnetic storage device, or any appropriate combination thereof.

In addition, although operations are described in a particular order, this should not be understood as requiring such operations to be completed in the particular order shown or in a successive order, or performing all the operations illustrated in the figures to obtain the desired results. In some cases, multitasking or parallel processing is advantageous. Similarly, although the foregoing descriptions include some specific implementation details, this should not be construed as limiting the scope of any claim, but rather as descriptions of specific example embodiments. Some features described in this specification in the context of separate example embodiments may alternatively be integrated into and implemented in a single example embodiment. On the contrary, various features described in the context of a single example embodiment may alternatively be implemented separately in a plurality of example embodiments or in any appropriate sub-combination.

Although the subject matter has been described in language specific to structural features and/or methodological actions, it should be understood that the subject matter defined in the appended claims is not limited to the specific features or actions described above. Rather, the specific features and actions described above are disclosed as example forms of implementing the claims.

## Claims

1. A short-range wireless communication method, comprising:
generating, by a receiving device, a feedback frame in response to receiving a data frame, wherein the feedback frame comprises first indication information, the first indication information is obtained after the receiving device encodes an access code of the sending device in the data frame, the first indication information indicates whether the data frame is correctly received, and the first indication information is indicated in a part other than a packet header field and a data field in the feedback frame; and
sending the feedback frame to the sending device.

2. The method according to claim 1, wherein the generating a feedback frame comprises:
performing cyclic redundancy check on the received data frame;
generating the first indication information by encoding the access code in the data frame based on a check result; and
generating the feedback frame based on the first indication information.

3. The method according to claim 2, wherein the generating the first indication information by encoding the access code in the data frame based on a check result comprises:
dividing the access code into a plurality of subcode segments;
determining a group of first target bits based on the check result, wherein one reference bit in the first target bits corresponds to one subcode segment in the plurality of subcode segments;
encoding a corresponding subcode segment in the plurality of subcode segments by using one first target bit in the group of first target bits; and
generating the first indication information based on a plurality of encoded subcode segments.

4. The method according to claim 3, wherein the encoding a corresponding subcode segment in the plurality of subcode segments by using one first target bit in the group of first target bits comprises:
performing encoding by performing a logical operation on the first target bit in the plurality of first target bits and the corresponding subcode segment in the plurality of subcode segments.

5. The method according to claim 3, wherein the determining a group of first target bits based on the check result comprises:
obtaining a plurality of groups of reference bits; and
in response to determining, based on the check result, that the data frame is correctly received, determining, as a group of first target bits, a first reference bit that is in the plurality of groups of reference bits and that corresponds to correct receiving.

6. The method according to claim 3, wherein the determining a group of first target bits based on the check result comprises:
obtaining a plurality of groups of reference bits; and
in response to determining, based on the check result, that the data frame is not correctly received, determining, as a group of first target bits, a second reference bit that is in the plurality of groups of reference bits and that corresponds to incorrect receiving.

7. The method according to claim 1, further comprising:
receiving, by the receiving device, a retransmitted data frame from the sending device;
obtaining second indication information from the retransmitted data frame, wherein the second indication information is obtained after the sending device encodes the access code of the sending device in the retransmitted data frame, and the second indication information indicates whether packet header information in the retransmitted data frame is consistent with packet header information in the previously received data frame; and
determining a data combination possibility of the retransmitted data frame and the data frame based on the second indication information.

8. The method according to claim 7, wherein the determining a data combination possibility comprises:
determining a group of second target bits by decoding the second indication information, wherein the second indication information is obtained after the sending device encodes the access code by using the group of second target bits;
determining, based on the group of second target bits, whether the packet header information in the retransmitted data frame is changed; and
if it is determined that the packet header information is changed, determining that the retransmitted data frame is not combined with data of the previously received data frame.

9. The method according to claim 8, further comprising:
if it is determined that the packet header information is not changed, determining that the retransmitted data frame is combined with the data of the previously received data frame.

10. The method according to claim 1, wherein the sending the feedback frame comprises:
if it is determined that the data frame is received on a downlink from the sending device to the receiving device, sending the feedback frame on an uplink from the receiving device to the sending device.

11. The method according to claim 1, wherein the sending the feedback frame comprises:
sending the feedback frame at a time interval dedicated to sending a feedback frame.

12. A short-range wireless communication method, comprising:
receiving, by a sending device, a feedback frame for the data frame from a receiving device, wherein the feedback frame comprises first indication information, the first indication information is obtained after the receiving device encodes an access code of the sending device in the data frame, the first indication information indicates whether the data frame is correctly received, and the first indication information is indicated in a part other than a packet header field and a data field in the feedback frame; and
determining, based on the first indication information, correctness of receiving the data frame by the receiving device.

13. The method according to claim 10, wherein the determining correctness of receiving the data frame comprises:
determining a group of first target bits by decoding the first indication information, wherein the first indication information is obtained after the receiving device encodes the access code by using the group of first target bits; and
determining, based on the group of first target bits, correctness of receiving the data frame by the receiving device.

14. The method according to claim 11, further comprising:
if it is determined that the data frame is not correctly received by the receiving device, sending a retransmitted data frame to the receiving device, wherein the retransmitted data frame comprises second indication information, the second indication information is obtained after the sending device encodes the access code of the sending device in the retransmitted data frame, and the second indication information indicates whether packet header information in the retransmitted data frame is consistent with packet header information in the previously received data frame.

15. The method according to claim 14, further comprising:
if it is determined that the data frame is not correctly received by the receiving device, determining a group of second target bits;
generating the second indication information by encoding the access code by using the group of second target bits; and
generating the retransmitted data frame based on the second indication information.

16. The method according to claim 14, wherein the sending a retransmitted data frame comprises:
if it is determined that the feedback frame is received on an uplink from the receiving device to the sending device, sending the retransmitted data frame on a downlink from the sending device to the receiving device.

17. The method according to claim 14, wherein the sending a retransmitted data frame comprises:
sending the retransmitted data frame at another time interval other than a time interval dedicated to sending a feedback frame.

18. A short-range wireless communication device, comprising:
a transceiver and a processor coupled to the transceiver, wherein
the processor is configured to perform the method according to any one of claims 1 to 11.

19. A short-range wireless communication device, comprising:
a transceiver and a processor coupled to the transceiver, wherein
the processor is configured to perform the method according to any one of claims 12 to 17.

20. A sending device, comprising:
a processor, configured to generate a feedback frame in response to receiving a data frame, wherein the feedback frame comprises first indication information, the first indication information is obtained after the receiving device encodes an access code of the sending device in the data frame, the first indication information indicates whether the data frame is correctly received, and the first indication information is indicated in a part other than a packet header field and a data field in the feedback frame; and
a transceiver, coupled to the processor, and configured to send the feedback frame to the sending device.

21. A receiving device, comprising:
a processor, configured to determine, based on the first indication information, correctness of receiving the data frame by the receiving device; and
a transceiver, coupled to the processor, and configured to receive a feedback frame for the data frame from the receiving device, wherein the feedback frame comprises the first indication information, the first indication information is obtained after the receiving device encodes an access code of the sending device in the data frame, the first indication information indicates whether the data frame is correctly received, and the first indication information is indicated in a part other than a packet header field and a data field in the feedback frame.

22. A computer-readable storage medium, wherein the computer-readable storage medium stores computer-executable instructions, and when the computer-executable instructions are executed by a processor, the processor is enabled to perform the method according to any one of claims 1 to 11 or the method according to any one of claims 12 to 17.
